# EUROPÄISCHE PATENTSCHRIFT

(11) **EP 0 779 733 B1**
(45) Veröffentlichungstag und Bekanntmachung des Hinweises auf die Patenterteilung: **16.08.2000**
(21) Anmeldenummer: 96402725.4
(22) Anmeldetag: 12.12.1996
(51) Int. Cl.: H04M 15/00, H04Q 3/00, H04M 3/42

(54) **Verfahren zur Vergebührung der Nutzung eines Telekommunikations-Dienstes sowie Vermittlungssystem, Dienststeuereinrichtung und Netzwerkmanagementeinrichtung**
Method for billing the use of telecommunication services, as well as switching system, service control and network management devices
Procédé de taxation de l'utilisation des services de télécommunications, système de communication, dispositifs de commande de service et de gestion de réseau

(30) Priorität: 16.12.1995 DE 19547194
(43) Veröffentlichungstag der Anmeldung: 18.06.1997
(73) Patentinhaber: ALCATEL, 75008 Paris (FR)
(72) Erfinder: Weik, Hartmut, 70195 Stuttgart (DE); Krank, Lothar, 71229 Leonberg (DE); Stahl, Uwe, 71229 Leonberg (DE); Falkner, Rüdiger, 71254 Ditzingen (DE); Lautenschlager, Wolfgang, 71287 Weissach-Flacht (DE)
(74) Vertreter: Knecht, Ulrich Karl, Dipl.-Ing.

(56) Entgegenhaltungen:
- EP-A- 0 452 591
- US-A- 5 146 491
- US-A- 5 148 474
- US-A- 5 475 740

## Beschreibung

Die Erfindung betrifft ein Verfahren zur Vergebührung der Nutzung eines Telekommunikations-Dienstes eines Dienstanbieters nach dem Oberbegriff von Anspruch 1, ein Vermittlungssystem nach dem Oberbegriff von Anspruch 8, eine Dienststeuereinrichtung nach dem Oberbegriff von Anspruch 9 und eine Netzwerkmanagementeinrichtung nach dem Oberbegriff von Anspruch 11.

Die Anzahl der in einem Kommunikationsnetz angebotenen Telekommunikations-Dienste wächst zunehmend. Die Erfindung geht nun von einer Gruppe solcher Telekommunikations-Dienste aus, die als "Kiosk-Dienste" bezeichnet werden.

Eine mögliche Implementierung und Realisierung dieser Gruppe von Diensten entsprechend dem IN-Konzept (IN = Intelligent Network) wird in dem Artikel "Dienste in Intelligenten Netzen" von X. du Vachat et al, Elektrisches Nachrichtenwesen, Band 63, Nr. 4, 1989, beschrieben.

Ein Kommunikationsnetz enthält sogenannte Dienstvermittlungsknoten (Service Switching Points), über die ein Dienstnutzer Zugang zu dem Kiosk-Dienst erhält. Der Kiosk-Dienst selbst ist in einem sogenannten Dienststeuerungsknoten (Service Control Point) mittels eines Dienstprogrammes realisiert. Der Kiosk-Dienst wird hierbei nicht von dem Netzbetreiber, also der öffentlichen oder privaten Gesellschaft, die das Netz betreibt und die IN-Infrastruktur für die Dienste bereitstellt, sondern von einem Dienstanbieter bereitgestellt.

Eine Dienstanfordrung wird nun vom Dienstnutzer über den Dienstvermittlungsknoten zum Dienststeuerungsknoten geleitet, der den Kiosk-Dienst erbringt. Ein solcher Kiosk-Dienst besteht hierbei beispielsweise in einem Informationsdienst, der Wettervorhersagen, Börsenberichte oder Sportergebnisse liefert und bei dem der Dienstnutzer mit einer höheren Gebühr als der reinen Gesprächsgebühr belastet wird. Die Vergebührung dieser höheren Gebühr wird dadurch realisiert, daß für die Verbindung zu dem Kiosk-Dienst im Kommunikationsnetz ein höherer Gebührentakt verwendet wird. Die Gebühren für die Nutzung des Kiosk-Dienstes werden somit automatisch mit den reinen Gesprächsgebühren dem Fernmeldekonto des Dienstnutzers belastet und damit vom Netzbetreiber eingezogen.

Ein Nachteil dieser Art und Weise der Vergebührung eines Kiosk-Dienstes ist, daß die Vergebührung des Kiosk-Dienstes stark mit der Vergebührung der reinen Gesprächsgebühren verkoppelt ist. Dadurch wird der Dienstanbieter bei der Gestaltung seines Vergebührungs-Konzepts stark eingeschränkt.

Der Erfindung liegt so die Aufgabe zugrunde, ein Vergebührungsverfahren für Telekommunikations-Dienste zu finden, bei dem die Vergebührung des Telekommunikations-Dienstes in höherem Maße von der Vergebührung der reinen Verbindungsgebühren entkoppelt ist.

Diese Aufgabe wird gelöst durch ein Verfahren zur Vergebührung der Nutzung eines Telekommunikations-Dienstes nach der Lehre von Anspruch 1 sowie durch ein Vermittlungssystem, eine Dienststeuereinrichtung und eine Netzwerkmanagementeinrichtung nach der Lehre von Anspruch 8, 9 bzw. 11.

Der Erfindung liegt der Gedanke zugrunde, nur bei erfolgter Autorisierung durch den Netzbetreiber den Dienst zu erbringen und nur dann eine vom Dienstanbieter bestimmte Gebühr durch den Netzbetreiber einzuziehen.

Vorteilhafte Ausgestaltungen der Erfindung sind den Unteransprüchen zu entnehmen.

Durch die Erfindung ist es einem Dienstanbieter möglich, ganz neue Formen der Vergebührung für die Nutzung seines Dienstes zu verwenden. Beispielsweise ist es möglich, für die Nutzung des Dienstes einen Festbetrag zu veranschlagen, der unabhängig von der Nutzungsdauer des Dienstes ist.

Um eine fehlerhafte Autorisierung durch den Netzbetreiber zu vermeiden, ist es weiter vorteilhaft, daß die den Dienst erbringende Einheit bereits vor der Autorisierung Daten über die Nutzungsgebühr des Dienstes an die für die Autorisierung zuständige Einheit übermittelt. Weiter ist es hierfür vorteilhaft, daß diese Autorisierungseinheit Daten über den Dienstnutzer ermittelt und diese Informationen der Entscheidung über eine Autorisierung zugrunde legt.

Im folgenden wird die Erfindung anhand dreier Ausführungsbeispiele unter Zuhilfenahme der beiliegenden Zeichnungen erläutert.
- Fig.1: zeigt ein Blockschaltbild einer Kommunikationsanordnung mit einem Kommunikationsnetz und einer erfindungsgemäßen Dienststeuereinrichtung.
- Fig. 2a: zeigt eine symbolische Darstellung des Ablaufs des erfindungsgemäßen Verfahrens für ein erstes Ausführungsbeispiel.
- Fig. 2b: zeigt eine symbolische Darstellung des Ablaufs des erfindungsgemäßen Verfahrens für ein zweites Ausführungsbeispiel.
- Fig. 2c: zeigt eine symbolische Darstellung des Ablaufs des erfindungsgemäßen Verfahrens für ein drittes Ausführungsbeispiel.
- Fig. 3: zeigt ein Flußdiagramm für das erfindungsgemäße Verfahren nach Fig. 2a bis 2c.

Im ersten Ausführungsbeispiel wird der Ablauf des erfindungsgemäßen Verfahrens zur Vergebührung der Nutzung eines Telekommunikations-Dienstes in einer Kommunikationsanordnung aufgezeigt, die ein erfindungsgemäßes Vermittlungssystem und eine erfindungsgemäße Dienststeuereinrichtung aufweist.

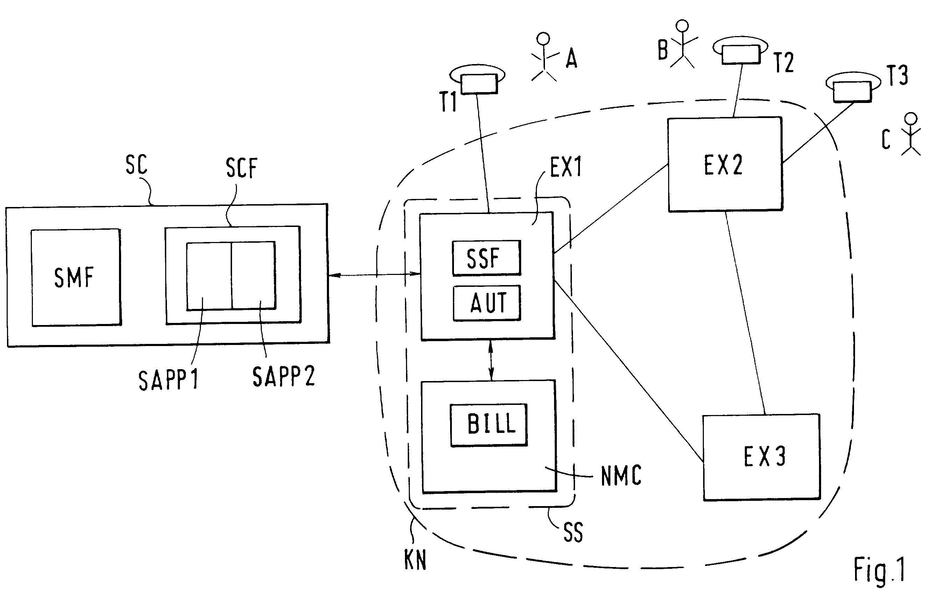

Fig. 1 zeigt eine Dienststeuereinrichtung SC, ein Kommunikationsnetz KN, drei Endgeräte T1 bis T3 und drei Teilnehmer A bis C, die den Endgeräten T1, T2 bzw. T3 zugeordnet sind. Das Kommunikationsnetz KN ist mit der Dienststeuereinrichtung SC und mit den Endgeräten T1 bis T3 verbunden.

Die Endgeräte T1 bis T3 sind Endgeräte für ein Telekommunikationsnetz. Die Endgeräte T1 und T2 sind normale Fernsprechendgeräte. Das Endgerät T3 ist ein öffentliches Fernsprechendgerät. Es handelt sich bei ihm beispielsweise um einen Münzfernsprecher, einen Kartenfernsprecher oder um ein Clubtelefon. Die Anzahl der an das Kommunikationsnetz KN angeschlossenen Endgeräte ist beispielhaft gewählt. Bei den Endgeräten T1 bis T3 könnte es sich auch um andersartige Endgeräte für Telekommunikationsnetze handeln, beispielsweise um Rechnersysteme, Bildfernsprecher oder Fax-Geräte.

Das Kommunikationsnetz KN ist wie ein übliches Fernsprechnetz ausgestaltet. Es weist drei miteinander vermaschte Vermittlungseinrichtungen EX1 bis EX3 und eine Netzwerkmanagementeinrichtung NMC auf. Die Vermittlungseinrichtung EX1 und die Netzwerkmanagementeinrichtung NMC tauschen miteinander Daten aus und bilden ein Vermittlungssystem SS. Die Vermittlungseinrichtung EX1 tauscht Daten mit der Dienststeuereinrichtung SC aus.
Bei den Vermittlungseinrichtungen EX1 bis EX3 handelt es sich um übliche Vermittlungsstellen für ein Fernsprechnetz. Die Vermittlungseinrichtung EX1 ist hierbei besonders ausgestaltet. In die Steuerung der Vermittlungseinrichtung EX1 sind zusätzlich Dienstvermittlungsfunktionen implementiert, die eine Dienststeuereinheit SSF bilden und die beim Erkennen eines Verbindungswunsches mit einer besonderen Dienstkennung über eine Datenverbindung Anfragen an die Dienststeuereinrichtung SC richten und als Antwort darauf von dieser Anweisungen erhalten, die die weitere Behandlung des Verbindungswunsches betreffen. Durch diese Dienstvermittlungsfunktionen erfüllt die Vermittlungseinrichtung EX1 die Funktion eines Dienstvermittlungsknotens nach dem IN-Konzept (IN = Intelligent Network). Die Realisierung eines solchen Dienstvermittlungsknotens und damit der Vermittlungseinrichtung EX1 ist beispielsweise in dem Artikel "Produkte für intelligente Netze" von J.-P. Heutzen, Elektrisches Nachrichtenwesen, Band 63, Nr. 4, 1989 beschrieben.

Die Vermittlungseinrichtung EX1 weist weiter eine Autorisierungseinheit AUT auf. Die Autorisierungseinheit AUT wird hierbei von Software-Modulen gebildet, die in die Steuerung der Vermittlungseinrichtung EX1 implementiert sind. Auf eine Anfrage von der Dienststeuereinrichtung SC entscheidet die Autorisierungseinheit AUT, ob ein Einzug der Gebühren für die Nutzung eines von der Dienststeuereinrichtung SC zu erbringenden Telekommunikations-Dienstes durch eine Vergebührungseinheit des Netzbetreibers möglich ist. Ist dies der Fall, so sendet sie eine Bestätigungsnachricht an die Dienststeuereinrichtung SC.

Es ist auch möglich, daß noch weitere Vermittlungseinrichtungen des Kommunikationsnetzes KN wie die Vermittungseinrichtung EX1 ausgestaltet sind und somit den Zugang zu der Dienststeuereinrichtung SC ermöglichen.

Die Netzwerkmanagementeinrichtung NMC dient der Bedienung und Verwaltung der Vermittlungseinrichtung EX1. Es ist hierbei möglich, daß die Netzwerkmanagementeinrichtung NMC diese Funktionen ebenfalls für die Vermittlungseinrichtungen EX2 und EX3 durchführt.

Die Netzwerkmanagementeinrichtung NMC basiert auf einem Rechnersystem, das mit der Vermittlungseinrichtung EX1 über eine Managementschnittstelle, beispielsweise eine Q3-Schnittstelle, verbunden ist. Neben den üblichen Netzwerkmanagementfunktionen wie Fehlerverwaltung, Konfigurationsverwaltung, Durchführungsverwaltung und Sicherungsverwaltung führt die Netzwerkmanagementeinrichtung NMC auch Funktionen der Abrechnungsverwaltung für Teilnehmer des Kommunikationsnetzes KN des Netzbetreibers aus. Hierfür weist sie eine Vergebührungseinheit BILL auf, die von entsprechenden auf dem Rechnersystem der Netzwerkmanagementeinrichtung NMC ablaufenden Softwaremodulen gebildet wird. Die Vergebührungseinheit BILL erfaßt Gebührenzählerstände für Verbindungen von Teilnehmer des Kommunikationsnetzes KN, verarbeitet die Gebührendaten und führt die Abrechnung und den Einzug der Gebühren für diese Teilnehmer durch. Hierzu werden von ihr beispielsweise Teilnehmern zugeordnete Fernmeldekonten geführt, für die in gewissen Zeitabständen Abrechnungen erstellt werden oder es werden Gebühren mittels Diensten mit Kreditkartenunternehmen verrechnet. Neben den Gebühren für die Nutzung des Kommunikationsnetzes KN des Netzbetreibers führt die Vergebührungseinheit BILL auch den Gebühreneinzug für von der Dienststeuereinrichtung SC bereitgestellten Telekommunikations-Diensten von Dienstanbietern durch.

Der Aufbau der Netzwerkmanagementeinrichtung NMC kann beispielsweise dem Artikel "Telecommunication Management Network (TMN): Architektur, Schnittstellen und Anwendungen" von R. Falkner et al, NTZ, Band 43, Heft 6, 1990 entnommen werden.

Es ist auch möglich, daß die Netzwerkmanagementeinrichtung NMC einem anderen der Vermittlungseinrichtungen des Kommunikationsnetzes KN zugeordnet ist. Hierbei würde es sich vorzugsweise um die Teilnehmervermittlungsstelle des Teilnehmers handeln, der eine Dienstanforderung an die Dienststeuereinrichtung SC richtet.
Die Vermittlungseinrichtung EX1 und die Netzwerkmanagementeinrichtung NMC bilden ein Vermittlungssystem SS. Als Vermittlungssystem wird hier ein System betrachtet, das die Funktionen der Autorisierungseinheit AUT und der Vergebührungseinheit BILL durchführt. Es ist auch möglich, daß Funktionen der Netzwerkmanagementeinrichtung NMC in die Vermittlungseinrichtung EX1 integriert sind und somit das Vermittlungssystem SS von der Vermittlungseinrichtung EX1 gebildet wird.

Die Dienststeuereinrichtung SC basiert auf einem Rechnersystem, das mit der Vermittlungseinrichtung EX1 beispielsweise über ein Nr. 7 Zeichengabenetz verbunden ist. Dieses Rechnersystem stellt eine Plattform für Software-Module bereit, die die Funktion eines Dienststeuerungsknotens und eines Dienstmanagementsystems nach dem IN-Konzept durchführen. Sie weist so eine Dienststeuerungseinheit SCF und eine Dienstmanagementeinheit SMF auf, die die entsprechenden Funktionen durchführen.

Es ist auch möglich, daß die Dienstmanagementeinheit SMF und die Dienststeuerungseinheit SCF von zwei verschiedenen Rechnersystemen gebildet werden, die beispielsweise über ein X.25 Netz miteinander verbunden sind. In diesem Fall würde die Dienststeuereinrichtung von dem Rechnersystem mit der Dienststeuereinheit SCF gebildet.

Der grundsätzliche Aufbau der Dienststeuereinrichtung SC kann beispielsweise dem bereits oben erwähnten Artikel "Produkte für intelligente Netze", Elektrisches Nachrichtenwesen, Band 63, Nr. 4, 1989, entnommen werden.

Die Dienststeuereinheit SCF weist zwei Dienstbearbeitungseinheiten SAPP1 und SAPP2 auf. Die Anzahl der Dienstbearbeitungseinheiten ist beispielhaft gewählt. Die Dienstbearbeitungseinheiten SAPP1 und SAPP2 stellen jeweils einen Telekommunikations-Dienst eines Netzbetreibers bereit. Hierzu kommunizieren sie über eine Datenverbindung mit der Vermittlungseinrichtung EX1. Über diese Verbindung beeinflussen sie die weitere Behandlung einer an sie gerichteten Anforderung durch die Vermittlungseinrichtung EX1, beispielsweise die Weiterleitung dieser Anforderung zu einer bestimmten Rufnummer des Kommunikationsnetzes KN. Darüberhinaus ist es ihnen auch möglich, den Aufbau einer Nutzverbindung zu dem anfordernden Teilnehmer zu veranlassen und dem Teilnehmer über diese Nutzverbindung beispielsweise Sprachansagen zuzusenden. Für die Bereitstellung solcher Sprachansagen ist es hierbei auch möglich, daß der Vermittlungseinrichtung EX1 ein Dienstunterstützungssystem (Intelligent Peripheral) zugeordnet ist, das diese Sprachansagen bereitstellt und über die Dienstvermittlungseinrichtung EX1 oder direkt mit der Dienststeuereinrichtung SC kommuniziert. Der Aufbau eines solchen Dienstunterstützungssystems kann beispielsweise dem Artikel "Voice services on the intelligent network: intelligent peripherals and service nodes" von F. Bosco, CSELT Technical Reports, Volume XX, No. 4, 1992, entnommen werden.

Die Dienstbearbeitungseinheit SAPP1 stellt einen Telekommunikations-Dienst eines Dienstanbieter bereit, dessen Nutzung für den Dienstnutzer kostenpflichtig ist. Bei dem Dienst handelt es sich vorzugsweise um einen Informationsdienst, es kann sich aber generell um jeden beliebigen Dienst handeln. Der Gebühreneinzug für die Nutzung des Dienstes wird zumindest teilweise nicht über eine Vergebührungseinheit des Dienstanbieters, sondern des Netzbetreibers des Kommunikationsnetzes KN durchgeführt.

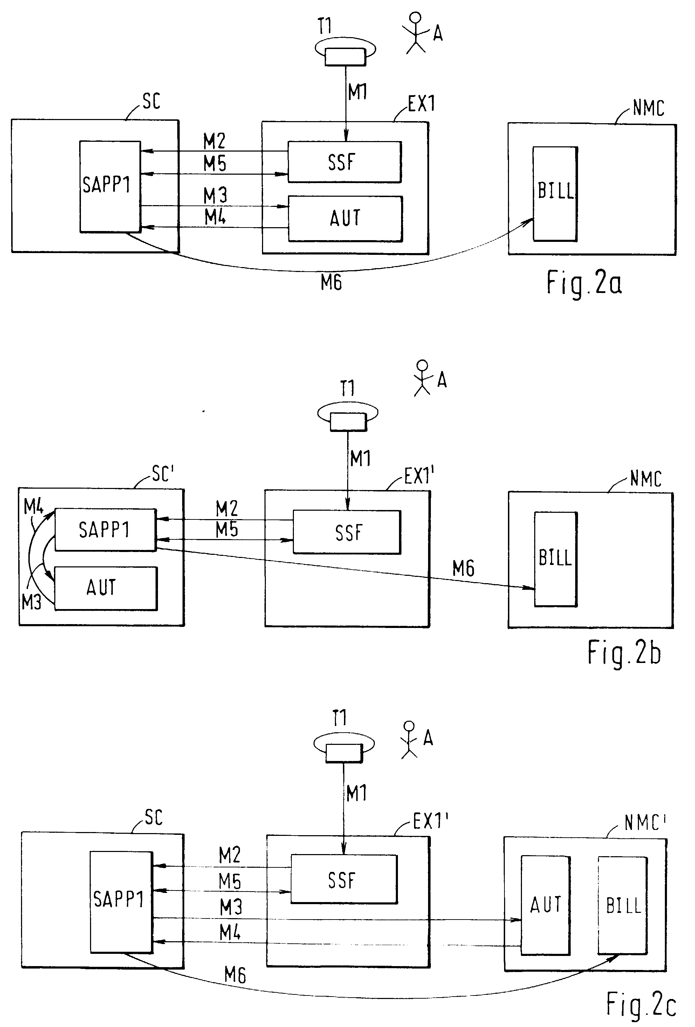

Die Diensterbringungseinheit SAPP1 erbringt den Telekommunikations-Dienst nach Empfang einer Dienstanforderung erst dann, wenn sie von der Autorisierungseinheit AUT eine Bestätigungsnachricht empfängt, die ihr anzeigt, daß der Netzbetreiber bereit ist, die Vergebührung für die Nutzung des Telekommunikations-Dienstes zu übernehmen. Nach der Durchführung des Dienstes sendet die Diensterbringungseinrichtung SAPP1 eine Nachricht mit der Gebühr für die Nutzung des Dienstes an die Vergebührungseinheit BILL.
Die Durchführung des Vergebührungsverfahrens wird nun anhand von Fig. 2a erläutert.

Fig. 2a zeigt das Endgerät T1, den zugeordneten Teilnehmer A, die Dienststeuereinrichtung SC, die Diensterbringungseinheit SAPP1, die Vermittlungseinrichtung EX1 mit der Dienstvermittlungseinheit SSF und die Autorisierungseinheit AUT, und die Netzwerkmanagementeinrichtung NMC mit der Vergebührungseinheit BILL.

Der Teilnehmer A sendet über das Endgerät T1 als Dienstanforderung einen Verbindungswunsch M1 mit der Dienstkennung des von der Diensterbringungseinheit SAPP1 bereitgestellten Telekommunikations-Dienstes, der durch das Kommunikationsnetz KN zu der Vermittlungseinrichtung EX1 geleitet wird. Es ist hierbei auch möglich, daß der Teilnehmer A eine Dienstanforderung auf einem anderen Wege bewirkt, beispielsweise in dem ein Abheben des Hörers direkt als Dienstanforderung interpretiert wird.

Die Dienstvermittlungseinheit SSF erkennt die Dienstanforderung für den von der Diensterbringungseinheit SAPP1 erbrachten Dienst und leitet die Dienstanforderung an diesen weiter, indem sie eine entsprechende Nachricht M2 an diese sendet. Auf dem Empfang der Nachricht M2 sendet die Dienstbearbeitungseinheit SAPP1 eine Nachricht M3 an die Autorisierungseinheit AUTH. Die Nachricht M3 enthält hierbei Daten über den die Dienstanforderung abgebenden Teilnehmer und über die voraussichtlich für die Nutzung des Dienstes anfallenden Gebühren. Die Nachricht M3 wird hierbei von der Autorisierungseinheit AUT als Anfrage für die Übernahme der Vergebührung durch den Netzbetreiber interpretiert.

Es ist auch möglich, auf die Nachricht M3 zu verzichten. Beispielsweise könnte eine Nachricht mit den entsprechenden Daten von der Dienstvermittlungseinheit SSF bei Erkennen einer Dienstanforderung für die Dienstbearbeitungseinheit SAPP1 direkt an die Autorisierungseinheit AUT gesendet werden. Weiter ist es möglich, daß von der Diensterbringungseinheit SAPP1 oder von der Dienstvermittlungseinheit SSF lediglich eine Anforderungsnachricht an die Autorisierungseinheit AUT gesendet wird, und die Autorisierungseinheit AUT dann selbst die für ihre Entscheidung benötigten Daten ermittelt.

Die Autorisierungseinheit AUT entscheidet aufgrund der in der Nachricht M3 enthaltenen Daten oder anderer, von ihr ermittelter Daten, ob die Vergebührung des von der Diensterbringungseinheit SAPP1 zu erbringenden Dienstes von der Vergebührungseinheit BILL des Netzbetreibers durchzuführen ist. Ist dies der Fall, so sendet sie eine Bestätigungsnachricht M4 an die Dienstbearbeitungseinheit SAPP1. Die Dienstbearbeitungseinheit SAPP1 erbringt sodann beim Erkennen der Nachricht M4 den angeforderten Dienst für den Teilnehmer A. Hierfür tauscht die Diensterbringungseinheit SAPP1 Nachrichten M5 mit der Dienstvermittlungseinheit SSF aus.

Nach Beendigung der Diensterbringung berechnet die Diensterbringungseinheit SAPP1 die Gebühr für die Nutzung des Dienstes. Es ist hierbei auch möglich, daß als Gebühr ein Festbetrag berechnet wird. Anschließend wird eine Nachricht M6 mit Daten über die berechnete Gebühr an die Vergebührungseinheit BILL gesendet. Die Vergebührungseinheit BILL des Netzbetreibers führt sodann den Gebühreneinzug für diese Gebühr durch.

Der Austausch der Nachrichten M2 und M5 wird über die Kommunikations-Mechanismen nach dem IN-Konzept durchgeführt. Für den Austausch der Nachrichten M3 und M4 können ebenfalls solche Kommunikations-Mechanismen verwendet werden. Es ist jedoch auch möglich, daß hierfür eine eigenständige (logische) Verbindung zwischen der Diensterbringungseinheit SAPP1 und der Autorisierungseinheit AUT aufgebaut wird. Diese Verbindung könnte auch auf einem anderen Transportnetz basieren, beispielsweise auf einem X.25 Netz. Der Austausch der Nachricht M6 kann zum einen über die Standard-Kommunikations-Mechanismen zwischen der Vermittlungseinrichtung EX1, der Dienststeuereinrichtung SC und der Netzwerkmanagementeinrichtung NMC durchgeführt werden. Zum anderen ist es auch möglich, daß eine separate Kommunikationsverbindung zwischen der Diensterbringungseinheit SAPP1 und der Netzwerkmanagementeinrichtung NMC aufgebaut wird, die beispielsweise auf einem Nr. 7 Signalisierungsnetz oder einem X.25 Netz basiert.

Die oben beschriebene Art und Weise der Vergebührung von Diensten ist nicht auf Dienste beschränkt, die mittels des IN-Konzepts erbracht werden. Es ist beispielsweise möglich, daß die Diensterbringungseinheit SAPP1 in die Steuerung der Vermittlungseinrichtung EX1 integriert ist und somit der Dienst von der Vermittlungseinrichtung EX1 erbracht wird. Der Ablauf des Verfahrens und die Kommunikationsbeziehungen ergeben sich analog nach Fig. 1 und Fig. 2a bis 2b.

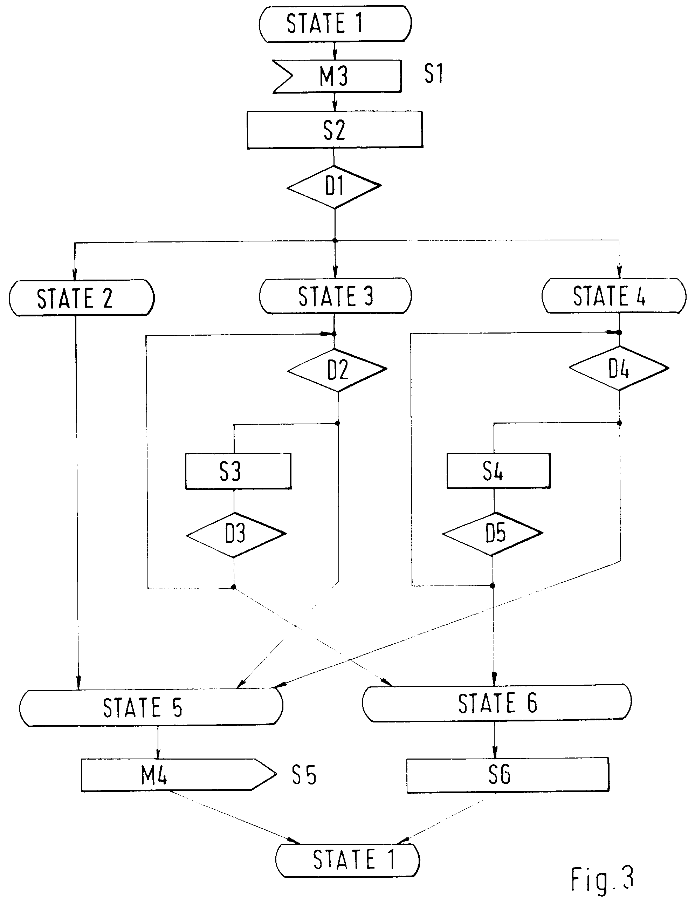

Im folgenden wird die Autorisierungseinheit AUT anhand des in Fig. 3 dargestellen Ablaufdiagramms detailierter beschrieben.

Fig. 3 zeigt sechs Zustände STATE1 bis STATE6, sechs Schritte S1 bis S6 und fünf Verzweigungen D1 bis D5.

Vor Eintreffen der Nachricht M3 befindet sich die Autorisierungseinheit AUT im einem Warte-Zustand, dem Zustand STATE1. Wird die Nachricht M3 empfangen (Schritt S1), so werden in dem Schritt S2 Parameter ermittelt, die dem die Verbindungsanforderung abgebenden Teilnehmer zugeordnet sind.

Solche Parameter beschreiben, ob es sich bei dem Teilnehmer um einen Teilnehmer handelt, der über ein privates Endgerät oder über ein öffentliches Endgerät die Verbindungsanforderung absetzt. Als private Endgeräte werden hierbei Endgeräte angesehen, deren Gebührenaufkommen einem Teilnehmer zugeordnet ist. Solche Endgeräte sind beispielsweise Endgeräte, die über den Anschluß von Privatpersonen oder Firmen an das Kommunikationsnetz KN angeschlossen sind. Öffentliche Endgeräte sind hingegen von mehreren Personen nutzbare Endgeräte, deren Gebührenaufkommen für jede Einzelverbindung dem jeweiligen nutzenden Teilnehmer verrechnet wird. Solche Endgeräte sind beispielsweise Münz- oder Karten-Fernsprechgeräte, die im öffentlichen oder im privaten Bereich (Clubtelefone) aufgestellt sind.

Diese Parameter werden hierbei aus der Rufnummer des Endgerätes bestimmt, über das der Teilnehmer die Dienstanforderung abgegeben hat. Diese Rufnummer wird mittels der Vermittlungseinrichtung EX1 ermittelt. Es ist jedoch auch möglich, daß die Ermittlung dieser Parameter mittels der Netzwerkmanagementeinrichtung NMC oder anderer Netzwerkmanagementeinrichtungen durchgeführt wird.

Weiter werden Parameter ermittelt, die Vereinbarungen zwischen dem Netzbetreiber und dem für einen Anschluß verantwortlichen Teilnehmer beschreiben. Solche Parameter sind beispielsweise die Vereinbarung eines Gebührenlimits oder eines Ausschlusses der Nutzung bestimmter Dienste.

Es ist auch möglich, daß noch weitere oder nur einige ausgewählte der oberen Parameter ermittelt werden. Auch ein Verzicht auf die Ermittlung solcher Parameter ist möglich, die Entscheidung über das Senden der Nachricht M4 könnte aufgrund anderer Daten oder generell erfolgen.
Folgende drei Fälle werden bei der Verzweigung D1 aufgrund der ermittelten Parameter unterschieden:
- Es handelt sich um einen Teilnehmer mit einem normalen, privaten Endgerät, beispielsweise um Teilnehmer A.
   Es ist auch möglich, daß ein Teilnehmer mit einem Kreditkartentelefon, bei dem die Bonität durch das Kreditkartenunternehmen abgesichert ist, wie dieser Fall behandelt wird.
- Es handelt sich um einen Teilnehmer mit einem privaten Endgerät, für den ein Gebührenlimit vereinbart wurde, beispielsweise um Teilnehmer B.
- Es handelt sich um einen Teilnehmer mit einem öffentlichen Endgerät, beispielsweise um Teilnehmer C.

Abhängig von diesen Parametern geht die Autorisierungseinheit AUT in den Zustand STATE2, STATE3 bzw. STATE4 über.

Im ersten Fall wird die Bestätigungsnachricht M4 ohne weitere Überprüfung gesendet. Aus dem Zustand STATE2 wird sogleich in den Zustand STATE5 gewechselt, auf den das Senden der Nachricht M4 im Schritt S5 folgt.

Im zweiten Fall wird ausgehend vom Zustand STATE3 in der Verzeigung D2 überprüft, ob das Gebührenlimit des Teilnehmers bereits überschritten ist. Für die Überprüfung des Gebührenlimits werden Nachrichten mit der Vergebührungseinheit BILL ausgetauscht, die die Daten über die Höhe des Gebührenlimits und des Fernmeldekontos verwaltet. In diese Überprüfung gehen weiter Daten über die zu erwartende Höhe der Gebühr für die Nutzung des Dienstes ein, die mit der Nachricht M3 übermittelt werden oder die mittels eines Datenbankzugriffs ermittelt werden. Wird das Gebührenlimit nicht verletzt, so wird von der Verzweigung D2 in den Zustand STATE5 übergegangen. Ist dies nicht der Fall, so wird in den Schritt S3 übergegangen, in dem der Teilnehmer beispielsweise durch eine Sprachansage auf die Verletzung des Gebührenlimits hingewiesen wird und ihm die Möglichkeit gegeben wird, beispielsweise durch Eingabe einer PIN-Nummer sein Gebührenlimit zu erhöhen. Diese Funktionen können auch durch Aufrufen eines Dienstes der Vermittlungseinrichtung EX1, der Vergebührungseinheit BILL oder der Dienststeuereinrichtung SC durchgeführt werden. Veranlaßt der Teilnehmer keine Erhöhung des Gebührenlimits, so wird in der Verzweigung D3 in den Zustand STATE6 übergegangen. Ansonsten wird folgt eine erneute Prüfung in der Verzweigung D2.

Im dritten Fall wird ausgehend von dem Zustand STATE4 in der Verzweigung D4 ermittelt, ob ausreichend Geld im Geldspeicher des Endgerätes oder genügend Geld auf der Karte verfügbar ist. Diese Überprüfung für die Verzweigung D4 wird hierbei durch den Austausch von Nachrichten mit einem entsprechenden Dienst der Netzwerkmanagementeinrichtung NMC, der Vermittlungseinrichtung EX1 oder einem von der Dienststeuereinrichtungen SC bereitgestellten Dienst durchgeführt. Ist ausreichend Geld vorhanden, so wird von der Verzweigung D4 in den Zustand STATE5 übergegangen. Ist dies nicht der Fall, so wird in den Schritt S4 übergegangen, in dem der Teilnehmer beispielsweise durch eine Sprachansage aufgefordert wird, den Geldspeicher des Endgerätes mit weiterem Geld aufzufüllen bzw. eine neue Karte zu verwenden. Kommt der Teilnehmer dieser Aufforderung nicht nach, so wird in der Verzweigung D5 in den Zustand STATE6 übergegangen, ansonsten erfolgt eine erneute Überprüfung in der Verzweigung D4.

Ausgehend vom Zustand STATE5 wird im Schritt 5 die Bestätigungsnachricht M4 an die Dienstbearbeitungseinheit SAPP1 gesendet und sodann in den Zustand STATE1 übergegangen. Ausgehend von dem Zustand STATE6, der die Ablehnung einer Autorisierung bedeutet, wird im Schritt S6 das Auflösen der Verbindung vom Teilnehmer zur Dienststeuereinrichtung SC veranlaßt. Es ist hierbei auch möglich zusätzlich eine Sprachansage an den Teilnehmer zu senden, die ihn auf die Ablehnung seiner Dienstanforderung hinweist. Auf das Auflösen der Verbindung könnte auch verzichtet werden.

Im folgenden wird ein zweites Ausführungsbeispiel der Erfindung anhand von Fig. 2b erläutert:

Fig. 2b zeigt das Endgerät T1 mit dem zugeordneten Teilnehmer A, eine Dienststeuereinrichtung SC' mit der Diensterbringungseinrichtung SAPP1 und der Autorisierungseinrichtung AUT, eine Vermittlungseinrichtung EX1' und die Netzwerkmanagementeinrichtung NMC mit der Vergebührungseinheit BILL. Diese Kommunikationsanordnung entspricht der Kommunikationsanordnung nach Fig. 1 und Fig. 2a, mit dem Unterschied, daß die Autorisierungseinheit AUT nicht in der Vermittlungseinrichtung EX1, sondern in der Dienststeuereinrichtung SC' angeordnet ist. Eine solche Anordnung der Autorisierungseinrichtung AUT ist möglich, da in der Regel nur die Dienstbearbeitungseinheiten SAPP1 und SAPP2 dem Einflußbereich des Dienstanbieters unterliegen und die zugrundeliegende Hard- und Softwareplattform vom Netzbetreiber bereitgestellt wird.

Es ergibt sich so folgender Ablauf des Verfahrens:

Eine Dienstanforderung vom Teilnehmer A wird über die Nachrichten M1 und M2 mittels der Dienstvermittlungseinheit SSF an die Dienstbearbeitungseinheit SAPP1 weitergeleitet. Die Dienstbearbeitungseinheit SAPP1 fordert mit der Nachricht M3 eine Autorisierung durch die Autorsierungseinheit AUT an, beim Empfang der Bestätigungsnachricht M4 erbringt sie den Dienst. Diese Kommunikation erfolgt innerhalb der Dienststeuereinrichtung SC', beispielsweise in Form einer Interprozesskommunikation zwischen zwei Software-Modulen. Für die Autorisierung-Entscheidung ist es hierbei notwendig, daß die Autorisierungseinheit AUT mit der Vermittlungseinheit EX1' oder der Netzwerkmanagementeinrichtung NMC kommuniziert.

Nach Erbingen des Dienstes wird die Nachricht M6 an die Vergebührungseinheit BILL gesendet.

Die Vorteile dieses Ausführungsbeispiels liegen darin, daß die Kommunikation zwischen der Dienstbearbeitungseinheit SAPP1 und der Autorisierungseinheit AUT vereinfacht wird und daß die Autorisierungseinheit AUT auf einfache Weise von der Dienststeuereinrichtung SC bereitgestellte Dienste verwenden kann.

Im folgenden wird ein drittes Ausführungsbeispiel der Erfindung anhand von Fig. 2c erläutert:

Fig. 2c zeigt das Endgerät T1, den zugeordneten Teilnehmer A, die Dienststeuereinrichtung SC mit der Dienstbearbeitungseinheit SAPP1, die Vermittlungseinrichtung EX1' mit der Dienstvermittlungseinheit SSF und eine Netzwerkmanagementeinrichtung NMC' mit der Vergebührungseinheit BILL und der Autorisierungseinheit AUT. Diese Kommunikationsanordnung entspricht der Kommunikationsanordnung nach Fig. 1, 2a und 3 mit dem Unterschied, daß die Autorisierungseinheit nicht in der Vermittlungseinrichtung EX1 sondern in der Netzwerkmanagementeinrichtung NMC' implementiert ist.
Entsprechendes gilt für den Kommunikationsablauf, bei dem nur der Unterschied besteht, daß die Nachrichten M3 und M4 zwischen der Dienststeuereinrichtung SC und Netzwerkmanagementeinrichtung NMC' ausgetauscht werden.

Der Vorteil dieses Ausführungsbeispieles ist es, daß die Autorisierungseinheit AUT auf einfache Weise Dienste der Netzwerkmanagementeinrichtung NMC, insbesondere der Vergebührungseinheit BILL in Anspruch nehmen kann. Hierdurch ergibt sich eine Vereinfachung in der Funktionsweise der Autorisierungseinheit AUT. Ein weiterer Vorteil ist, daß die Autorisierungseinheit AUT so die Autorisierung zentral für eine Vielzahl von Diensten verschiedener Dienssteuereinrichtungen durchführen kann.

## Patentansprüche

1. Verfahren zur Vergebührung der Nutzung eines Telekommunikations-Dienstes eines Dienstanbieters, wobei bei dem Verfahren eine Dienstanforderung von einem Teilnehmer (A) durch ein Telekommunikationsnetz (KN) eines Netzbetreibers zu einer Diensterbringungseinheit (SAPP1) des Dienstanbieters geleitet wird und bei dem eine Vergebührungseinheit (BILL) des Netzbetreibers den Gebühreneinzug für die Nutzung des Telekommunikations-Dienstes durchführt,
**dadurch gekennzeichnet**, daß die Diensterbringungseinheit (SAPP1) den angeforderten Telekommunikations-Dienst erst erbringt, wenn sie eine Bestätigungsnachricht (M4) von einer Autorisierungseinheit (AUT) des Netzbetreibers empfängt, daß eine Gebührennachricht (M6) mit Daten über eine Gebühr für die Nutzung des Telekommunikations-Dienstes von der Diensterbringungseinheit (SAPP1) an die Vergebührungseinheit (BILL) übermittelt wird und daß die Vergebührungseinheit (BILL) die Gebühr bei erfolgter Bestätigungsnachricht (M4) einzieht.

2. Verfahren nach Anspruch 1, dadurch gekennzeichnet, daß die Gebührennachricht (M6) nach der Erbringung des Dienstes übermittelt wird.

3. Verfahren nach Anspruch 1, dadurch gekennzeichnet, daß eine weitere Nachricht (M3) mit Daten über die Gebühr für die Nutzung des Telekommunikations-Dienstes vor der Erbringung des Dienstes an die Autorisierungseinheit (AUT) übermittelt wird und die Autorisierungseinheit (AUT) mittels dieser Daten der weiteren Nachricht über das Senden der Bestätigungsnachricht (M4) entscheidet.

4. Verfahren nach Anspruch 1, dadurch gekennzeichnet, daß die Autorisierungseinheit (AUT) ein dem Teilnehmer (A) zugeordneten Parameter ermittelt und abhängig von dem ermittelten Parameter über das Aussenden der Bestätigungsnachricht (M4) entscheidet.

5. Verfahren nach Anspruch 4, dadurch gekennzeichnet, daß ein erster Parameter für Teilnehmer (A) mit einem normalen Teilnehmeranschluß steht.

6. Verfahren nach Anspruch 4, dadurch gekennzeichnet, daß ein zweiter Parameter für Teilnehmer (B) mit einem Teilnehmeranschluß steht, dem ein Gebühren-Limit zugeordnet ist.

7. Verfahren nach Anspruch 4, dadurch gekennzeichnet, daß ein dritter Parameter für einen Teilnehmer (C) mit einem öffentlichen Endgerät (T3), insbesondere einem Münz-, Karten- oder Club-Fernsprecher, steht.

8. Vermittlungssystem (SS) für ein Telekommunikationsnetz (KN) eines Netzbetreibers mit einer Dienstvermittlungseinheit (SSF) zur Weiterleitung einer Dienstanforderung von einem Teilnehmer (A) zu einer Diensterbringungseinheit (SAPP1) eines Dienstanbieters und mit einer dem Netzbetreiber zugeordneten Vergebührungseinheit (BILL) zur Durchführung des Gebühreneinzugs für die Nutzung eines von der Diensterbringungseinheit (SAPP1) erbrachten Telekommunikations-Dienstes,
**dadurch gekennzeichnet**, daß das Vermittlungssystem (SS) mit einer Autorisierungseinheit (AUT) versehen ist, die so ausgestaltet ist, daß sie eine Bestätigungsnachricht (M4) an die Diensterbringungseinheit (SAPP1) sendet, die diese veranlaßt, den Telekommunikations-Dienst zu erbringen, und daß die Vergebührungseinheit (BILL) so ausgestaltet ist, daß sie von der Diensterbringungseinheit (SAPP1) eine Gebührennachricht (M6) mit Daten über eine Gebühr für die Nutzung des Telekommunikations-Dienstes empfängt und die Gebühr bei erfolgter Bestätigungsnachricht (M4) einzieht.

9. Dienststeuereinrichtung (SC) für Telekommunikations-Dienste mit einer Schnittstelle zum Anschluß an eine Dienstvermittlungseinrichtung (EX1) eines Telekommunikationsnetzes (KN), mit Mitteln zum Empfang einer Dienstanforderung von einem Teilnehmer (A) über die Dienstvermittlungseinrichtung (EX1) und mit einer Diensterbringungseinheit (SAPP1) eines Dienstanbieters zur Erbringung eines Telekommunikations-Dienstes auf die Dienstanforderung, **dadurch gekennzeichnet**, daß die Diensterbringungseinheit (SAPP1) mit Empfangs-Mitteln zum Empfang einer Bestätigungsnachricht (M4) von einer Autorisierungseinrichtung (AUT) des Netzbetreibers, mit Sende-Mitteln zur Übermittlung einer Gebührennachricht (M6), die Daten über eine Gebühr für die Nutzung des Telekommunikations-Dienstes enthält, an eine Vergebührungseinheit des Netzbetreibers, die zum Einzug der Gebühr bei erfolgter Bestätigungsnachricht (M4) dient, und mit Steuer-Mitteln versehen ist, die so ausgestattet sind, daß der angeforderte Telekommunikations-Dienst erst erbracht wird, wenn die Bestätigungsnachricht (M4) empfangen wird.

10. Dienststeuereinrichtung (SC) nach Anspruch 9, dadurch gekennzeichnet, daß die Autorisierungseinheit (AUT) in der Dienststeuereinrichtung (SC) enthalten ist.

11. Netzwerkmanagementeinrichtung (NMC) eines Netzbetreibers für ein Telekommunikationsnetz (KN), das mit einer Diestvermittlungseinrichtung (EX1) zur Weiterleitung einer Dienstanforderung von einem Teilnehmer zu einer Diensterbringungseinheit (SAPP1) eines Dienstanbieters versehen ist, wobei die Netzwerkmanagementeinrichtung (NMC) mit einer dem Netzbetreiber zugeordneten Vergebührungseinheit (BILL) zur Durchführung des Gebühreneinzugs für die Nutzung eines von der Diensterbringungseinheit (SAPP1) erbrachten Telekommunikations-Dienstes versehen ist,
**dadurch gekennzeichnet**, daß die Netzwerkmanagementeinrichtung (NMC) mit einer Autorisierungseinheit (AUT) versehen ist, die so ausgestaltet ist, daß sie eine Bestätigungsnachricht (M4) an die Diensterbringungseinheit (SAPP1) sendet, die diese veranlaßt, den Telekommunikations-Dienst zu erbringen, und daß die Vergebührungseinheit (BILL) so ausgestaltet ist, daß sie von der Diensterbringungseinheit (SAPP1) eine Gebührennachricht (M6) mit Daten über eine Gebühr für die Nutzung des Telekommunikations-Dienstes empfängt und diese Gebühr bei erfolgter Bestätigungsnachricht (M4) einzieht.

## Claims

1. A method of charging for the use of a telecommunications service of a service provider, wherein a service request from a subscriber (A) is routed through a telecommunications network (KN) of a network operator to a service-providing unit (SAPP1) of the service provider, and wherein a charging unit (BILL) of the network operator implements the charge collection for the use of the telecommunications service,
characterised in that the service-providing unit (SAPP1) does not provide the requested telecommunications service until it receives a confirmation message (M4) from an authorization unit (AUT) of the network operator, that a charge message (M6) containing data on a charge for the use of the telecommunications service is sent from the service-providing unit (SAPP1) to the charging unit (BILL), and that the charging unit (BILL) collects the charge following the confirmation message (M4).

2. A method according to Claim 1, characterised in that the charge message (M6) is sent following the provision of the service.

3. A method according to Claim 1, characterised in that a further message (M3) containing data on the charge for the use of the telecommunications service is sent to the authorization unit (AUT) prior to the provision of the service, and the authorization unit (AUT) makes a decision on the transmission of the confirmation message (M4) on the basis of this data of the further message.

4. A method according to Claim 1, characterised in that the authorization unit (AUT) determines a parameter assigned to the subscriber (A) and makes a decision on the transmission of the confirmation message (M4) as a function of the determined parameter.

5. A method according to Claim 4, characterised in that a first parameter represents subscribers (A) with a normal subscriber terminal.

6. A method according to Claim 4, characterised in that a second parameter represents subscriber (B) with a subscriber terminal which is assigned a charge limit.

7. A method according to Claim 4, characterised in that a third parameter represents a subscriber (C) with a public terminal (T3), in particular a coin-operated telephone, card-operated telephone or club telephone.

8. A switching system (SS) for a telecommunications network (KN) of a network operator with a service switching unit (SSF) for forwarding a service request from a subscriber (A) to a service-providing unit (SAPP1) of a service provider and with a charging unit (BILL), assigned to the network operator, for implementing the charge collection for the use of a telecommunications service provided by the service-providing unit (SAPP1),
characterised in that the switching system (SS) is provided with an authorization unit (AUT) which is designed such that it sends a confirmation message (M4) to the service-providing unit (SAPP1) which causes said service-providing unit (SAPP1) to provide the telecommunications service, and that the charging unit (BILL) is designed such that from the service-providing unit (SAPP1) it receives a charge message (M6) containing data on a charge for the use of the telecommunications service and collects the charge following the confirmation message (M4).

9. A service control device (SC) for telecommunications services with an interface for connection to a service switching device (EX1) of a telecommunications network (KN), with means for receiving a service request from a subscriber (A) via the service switching device (EX1), and with a service-providing unit (SAPP1) of a service provider for providing a telecommunications service in response to the service request, characterised in that the service-providing unit (SAPP1) is provided with receiving means for receiving a confirmation message (M4) from an authorization device (AUT) of the network operator, with transmitting means for transmitting a charge message (M6), which contains data on a charge for the use of the telecommunications service, to a charging unit of the network operator which serves to collect the charge following the confirmation message (M4), and with control means which are designed such that the requested telecommunications service is not provided until the confirmation message (M4) is received.

10. A service control device (SC) according to Claim 9, characterised in that the authorization unit (AUT) is contained in the service control device (SC).

11. A network management device (NMC) of a network operator for a telecommunications network (KN) which is provided with a service switching device (EX1) for forwarding a service request from a subscriber to a service-providing unit (SAPP1) of a service provider, wherein the network management device (NMC) is provided with a charging unit (BILL), assigned to the network operator, for implementing the charge collection for the use of a telecommunications service provided by the service-providing unit (SAPP1), characterised in that the network management device (NMC) is provided with an authorization unit (AUT) which is designed such that it sends a confirmation message (M4) to the service-providing unit (SAPP1) which causes said service-providing unit (SAPP1) to provide the telecommunications service, and that the charging unit (BILL) is designed such that from the service-providing unit (SAPP1) it receives a charge message (M6) containing data on a charge for the use of the telecommunications service, and collects this charge following the confirmation message (M4).

## Revendications

1. Procédé de taxation de l'utilisation d'un service de télécommunication d'un fournisseur de services, une requête de service étant acheminée au cours du procédé depuis un abonné (A) à travers un réseau de télécommunication (KN) d'un opérateur de réseau jusqu'à une unité de fourniture de services (SAPP1) du fournisseur de services, et dans lequel une unité de taxation (BILL) de l'opérateur de réseau exécute la perception de taxe pour l'utilisation du service de télécommunication, caractérisé en ce que l'unité de fourniture de services (SAPP1) fournit le service de télécommunication demandé uniquement lorsqu'elle reçoit un message de confirmation (M4) d'une unité d'autorisation (AUT) de l'opérateur de réseau, en ce qu'un message de taxe (M6) comportant des données concernant la taxe pour l'utilisation du service de télécommunication est transmis de l'unité de fourniture de services (SAPP1) à l'unité de taxation (BILL), et en ce que l'unité de taxation (BILL) perçoit la taxe si le message de confirmation (M4) a eu lieu.

2. Procédé selon la revendication 1, caractérisé en ce que le message de taxe (M6) est transmis après fourniture du service.

3. Procédé selon la revendication 1, caractérisé en ce qu'un autre message (M3) comportant des données concernant la taxe pour l'utilisation du service de télécommunication est transmis à l'unité d'autorisation avant fourniture du service et l'unité d'autorisation (AUT) décide au moyen de ces données du message supplémentaire de l'envoi du message de confirmation (M4).

4. Procédé selon la revendication 1, caractérisé en ce que l'unité d'autorisation (AUT) détermine un paramètre affecté à l'abonné (A) et décide en fonction du paramètre déterminé de l'envoi du message de confirmation (M4).

5. Procédé selon la revendication 4, caractérisé en ce qu'un premier paramètre représente des abonnés (A) disposant d'un raccordement d'abonné ordinaire.

6. Procédé selon la revendication 4, caractérisé en ce qu'un deuxième paramètre représente des abonnés (B) disposant d'un raccordement d'abonné auquel est affectée une limite de taxe.

7. Procédé selon la revendication 4, caractérisé en ce qu'un troisième paramètre représente un abonné (C) disposant d'un terminal public (T3), en particulier d'un téléphone à pièces, à carte ou d'un point téléphone.

8. Système de commutation (SS) pour un réseau de télécommunication (KN) d'un opérateur de réseau avec une unité de commutation de service (SSF) pour transférer une requête de service d'un abonné (A) à une unité de fourniture de services (SAPP1) d'un fournisseur de services et avec une unité de taxation (BILL) affectée à l'opérateur de réseau pour exécuter la perception de taxe pour l'utilisation d'un service de télécommunication fourni par l'unité de fourniture de services (SAPP1), caractérisé en ce que le système de commutation (SS) est équipé d'une unité d'autorisation (AUT) qui est réalisée de telle sorte qu'elle envoie un message de confirmation (M4) à l'unité de fourniture de services (SAPP1) qui amène celle-ci à fournir le service de télécommunication, et en ce que l'unité de taxation (BILL) est réalisée de telle sorte qu'elle reçoit de l'unité de fourniture de services (SAPP1) un message de taxe (M6) comportant des données concernant la taxe pour l'utilisation du service de télécommunication et perçoit la taxe si le message de confirmation (M4) a eu lieu.

9. Installation de commande de service (SC) pour des services de télécommunication avec une interface pour le raccordement à une installation de commutation de service (EX1) d'un réseau de télécommunication (KN), avec des moyens pour recevoir une requête de service provenant d'un abonné (A) par l'intermédiaire de l'installation de commutation de service (EX1) et avec une unité de fourniture de services (SAPP1) d'un fournisseur de services pour fournir un service de télécommunication suite à la requête de service, caractérisée en ce que l'unité de fourniture de services (SAPP1) est munie de moyens de réception pour recevoir un message de confirmation (M4) provenant d'une installation d'autorisation (AUT) de l'opérateur de réseau, de moyens d'émission pour transmettre un message de taxe (M6), qui contient des données concernant une taxe pour l'utilisation du service de télécommunication, à destination d'une unité de taxation de l'opérateur de réseau, qui sert à percevoir la taxe si le message de confirmation (M4) a eu lieu, et de moyens de commande qui sont équipés de telle sorte que le service de télécommunication est fourni seulement lorsque le message de confirmation (M4) est reçu.

10. Installation de commande de service (SC) selon la revendication 9, caractérisée en ce que l'unité d'autorisation (AUT) est contenue dans l'installation de commande de service (SC).

11. Installation de gestion de réseau (NMC) d'un opérateur de réseau pour un réseau de télécommunication qui est muni d'une installation de commutation de service (EX1) pour transférer une requête de service d'un abonné à une unité de fourniture de services (SAPP1) d'un fournisseur de services, l'installation de gestion de réseau (NMC) étant munie d'une unité de taxation (BILL) affectée à l'opérateur de réseau pour exécuter la perception de taxe pour l'utilisation d'un service de télécommunication fourni par l'unité de fourniture de services (SAPP1), caractérisée en ce que l'installation de gestion de réseau (NMC) est munie d'une unité d'autorisation (AUT) qui est réalisée de telle sorte qu'elle envoie un message de confirmation (M4) à l'unité de fourniture de services (SAPP1) qui amène celle-ci à fournir le service de télécommunication, et en ce que l'unité de taxation (BILL) est réalisée de telle sorte qu'elle reçoit un message de taxe (M6) de l'unité de fourniture de services (SAPP1) comportant des données concernant une taxe pour l'utilisation du service de télécommunication et perçoit cette taxe si le message de confirmation (M4) a eu lieu.
